# EUROPEAN PATENT APPLICATION

(11) **EP 3 763 854 A1**
(43) Date of publication of application: **13.01.2021**
(21) Application number: 20186962.5
(22) Date of filing: 24.01.2018
(51) Int. Cl.: D01F 9/12, C01B 32/174, D21H 13/50

(54) **SHAPED ARTICLES COMPRISING CARBON NANOTUBES**

(30) Priority: 24.01.2017 EP 17152775
(62) Divisional of application: 18700624.2
(71) Applicant: Conyar B.V., 6662 HP Elst (NL)
(72) Inventor: BOERSTOEL, Hanneke, 6824 NN Arnhem (NL); MEEUSEN-WIERTS, Monique, 6662 VJ Elst (NL); TER WAARBEEK, Ronald, 6904 ND Zevenaar (NL); LA FAILLE, Rene, 8014 RX Zwolle (NL); DE JONG, Jorrit, 6824 LA Arhnem (NL); MAATMAN, Hendrik, 7475 MG Markelo (NL); OTTO, Marcin Jan, 6662 HP Elst (NL)
(74) Representative: CPW GmbH

(57) **Abstract**

A shaped article obtainable by a process comprising the steps of supplying carbon nanotubes in an acidic liquid comprising at least one acid, the at least one acid having a Hammett acidity function less than that of 100% sulfuric acid, the at least one acid having a Hammett acidity function equal or more than that of 90% sulfuric acid, wherein the Hammett acidity function is determined for the acid in the acidic liquid, and shaping the carbon nanotubes in the acidic liquid into a shaped article.

## Description

The invention pertains to a process for manufacturing shaped articles comprising carbon nanotubes and to shaped articles comprising carbon nanotubes obtainable by said process.

The invention is in particular directed to a process for manufacturing carbon nanotubes fibers, but other shaped articles comprising carbon nanotubes, such as carbon nanotubes paper, carbon nanotubes tapes and coaxial wires comprising a shield comprising carbon nanotubes, the shield surrounding a central conductive core and an insulation layer surrounding the central conductive core may also be manufactured by the process.

Prior art processes for manufacturing carbon nanotubes fibers comprise a step of preparing a spinning solution by introducing carbon nanotubes into a super acid in order to obtain a spinning solution wherein each individual carbon nanotube is dissolved separately.

US 7,125,502 B2 discloses fibers of aligned single-wall carbon nanotubes manufactured by a process wherein the single-wall carbon nanotubes are introduced into 100% sulfuric acid or a super acid and are kept anhydrous and oxygen-free during mixing for a period up to 3 days in order to obtain carbon nanotubes which are dispersed individually and which can slide against each other and self-align. The super acid intercalates between individual single-wall carbon nanotubes.

WO 2009/058855 A2 discloses carbon nanotubes fibers processed from a solution of carbon nanotubes in a super acid solvent, the super acid intercalates between individual carbon nanotubes, wherein the concentration of carbon nanotubes in the super acid is such that the solution is in a liquid crystalline state.
WO 2013/034672 A2 discloses carbon nanotubes fibers having low resistivity extruded from a spinning solution comprising carbon nanotubes in a super acid.

It has been observed that prior art processes require carbon nanotubes of high quality, i.e. having a G/D ratio of at least 30, as a raw material and/or require a purifying step in order to obtain a raw material of a sufficient quality to provide a spinning solution which can be extruded into carbon nanotubes fibers.

It has also been observed that prior art processes require long mixing times, up to 72 hours, to arrive at a solution which can be extruded into carbon nanotubes fibers.

WO 2009/058855 A2 discloses that only chlorosulfonic acid is capable of dissolving carbon nanotubes with a length exceeding 1 µm, that only chlorosulfonic acid is capable of dissolving double-wall and multi-wall carbon nanotubes, and that only chlorosulfonic acid is capable of dissolving carbon nanotubes up to a concentration high enough that the solution has a viscosity which allows tensioning of the extrudate.

The use of chlorosulfonic acid in processes to manufacture carbon nanotubes fibers is undesired as chlorosulfonic is relatively expensive, is corrosive to the equipment required in the manufacture carbon of nanotubes (CNT) fibers, and is considered toxic to humans. It has also been noted that chlorosulfonic acid is not readily available from a large number of suppliers.

WO 2006/137893 A2 discloses a process to manufacture polymer-free carbon nanotube assemblies such as fibers, ropes, ribbons or films, comprising the step of dispersing nanofibers in a dispersion liquid that has a proton-donating ability below that of 100% sulfuric acid, i.e. without the use of super acids, to form a dispersion of nanofibers, wherein the dispersion liquid comprises water as its majority component by weight. In particular the dispersion is formed using a dispersal aid that functions as a surfactant, the resulting dispersion having a pH between 3 and 11. The carbon nanotubes fibers as provided by WO 2006/137893 A2 may have an electrical conductivity above 10 S/cm or above 100 S/cm.

However, there remains a need to further improve the processes of the prior art and to improve the properties of shaped articles comprising carbon nanotubes.

It is an object of the present invention to improve the process for manufacturing shaped articles comprising carbon nanotubes and/or improve the properties of shaped articles comprising carbon nanotubes.

The object of the invention is achieved by the process according to claim 1.

The process according to the invention for manufacturing shaped article(s) comprising carbon nanotubes, preferably consisting for at least 50 wt.% of carbon nanotubes, comprises the steps of supplying carbon nanotubes in an acidic liquid comprising at least one acid, the at least one acid having a Hammett acidity function less than that of 100% sulfuric acid, the at least one acid having a Hammett acidity function equal or more than that of 90% sulfuric acid, and shaping the acidic liquid comprising carbon nanotubes into a shaped article. As the Hammett acidity function in itself provides a negative value, it is to be understood that for the present invention an acid having a Hammett acidity function less than that of 100% sulfuric acid has a lower absolute value for the Hammett acidity function than the Hammett acidity function of 100% sulfuric acid. Likewise, an acid having a Hammett acidity function equal or more than that of 90% sulfuric acid has an equal or higher absolute value for the Hammett acidity function than the Hammett acidity function of 90% sulfuric acid.

The process enables to manufacture shaped articles comprising carbon nanotubes without utilizing a super acid while the shaped articles obtained by the process have advantageous properties, for example low resistivity, high thermal conductivity and/or high modulus.

In an embodiment, the process comprises the steps of supplying a dispersion of carbon nanotubes in an acidic liquid comprising at least one acid, the at least one acid having a Hammett acidity function less than that of 100% sulfuric acid, the at least one acid having a Hammett acidity function equal or more than that of 90% sulfuric acid, and shaping the dispersion into a shaped article.

In another embodiment, at least a part of the carbon nanotubes comprised in the acidic liquid is dissolved in the acidic liquid, the dissolved carbon nanotubes in the acidic liquid constituting at least 0.1 vol.% of the total volume of the dispersion,

The acidic liquid, preferably in a dispersion, comprising at least one acid having a Hammett acidity function less than that of 100% sulfuric acid, but equal or more than that of 90% sulfuric acid enables to obtain a dispersion of carbon nanotubes, while dissolving a part of the carbon nanotubes comprised in the acidic liquid. The Hammett acidity function is understood to be determined for the acid in the acidic liquid.

Although not being bound by theory, it is believed that the presence of dissolved carbon nanotubes between the carbon nanotubes which are dispersed in the dispersion results in improved coagulation of the shaped article when removing the acidic liquid when shaping the dispersion into a shaped article. It is believed that the dissolved carbon nanotubes provide a means for interaction between the carbon nanotubes dispersed in the acidic liquid of the dispersion, which results in that the carbon nanotubes are attracted to each other during coagulation.

The acidic liquid, preferably in a dispersion, comprising at least one acid having a Hammett acidity function less than that of 100% sulfuric acid, but equal or more than that of 90% sulfuric acid also enables to retain native ropes of carbon nanotubes in the acidic liquid to further improve the properties of the shaped articles comprising carbon nanotubes manufactured by the process, the shaped articles preferably being carbon nanotubes fibers, in particular improving the resistivity, the thermal conductivity and/or the modulus of the shaped articles comprising carbon nanotubes.

In an embodiment, the dissolved carbon nanotubes in the acidic liquid may constitute at least 0.15 vol.% of the total volume, preferably at least 0.25 vol.%, more preferably at least 0.5 vol.% of the total volume of the dispersion.

In an embodiment, in the process for manufacturing shaped article(s) comprising carbon nanotubes the acidic liquid comprises carbon nanotubes comprised in native ropes. Preferably, at least 10 wt.% of the carbon nanotubes comprised in the acidic liquid are comprised in native ropes, preferably at least 20 wt.%, more preferably at least 30 wt.%, more preferably at least 40 wt.%, most preferably at least 50 wt.% of the carbon nanotubes comprised in the acidic liquid are comprised in native ropes.

In an embodiment, the carbon nanotubes dissolved in the acidic liquid are distributed between the native ropes comprised in the acidic liquid to further improve the properties of the shaped articles comprising carbon nanotubes manufactured by the process. It is believed that if the carbon nanotubes dissolved in the acidic liquid distributed between the native ropes provide improved means for interaction between the carbon nanotubes dispersed in the acidic liquid. Preferably, the carbon nanotubes dissolved in the acidic liquid are distributed homogeneously between the native ropes for further improvement of the properties of the shaped articles comprising carbon nanotubes manufactured by the process. However, it may also be that native ropes are swollen in the acidic liquid resulting in improved properties of the shaped articles.

In an embodiment, the carbon nanotubes dissolved in the acidic liquid form a liquid crystalline phase in the dispersion. Preferably, the liquid crystalline phase is distributed between the carbon nanotubes dispersed in the acidic liquid of the dispersion.

In an embodiment, the process for manufacturing shaped article(s) comprising carbon nanotubes comprises the steps of supplying, preferably as a dispersion of, carbon nanotubes in an acidic liquid, the at least one acid in the acidic liquid is sulfuric acid having a Hammett acidity function equal or more than that of 90% sulfuric acid, preferably equal or more than that of 95% sulfuric acid, more preferably equal or more than that of 96% sulfuric acid, more preferably equal or more than that of 97% sulfuric acid, more preferably equal or more than that of 98% sulfuric acid, more preferably equal or more than that of 99% sulfuric acid, even more preferably equal or more than that of 99.8% sulfuric acid, even more preferably equal or more than that of 99.9% sulfuric acid. Although not yet fully understood, it is believed increasing the concentration of sulfuric acid is found to increase the density of the resulting shaped article comprising carbon nanotubes as carbon nanotubes dissolved in the acidic liquid provide a means for interaction between carbon nanotubes dispersed in the acidic liquid.

The acidic liquid comprising at least one acid having a Hammett acidity function equal or more than that of 90% sulfuric acid has a pH value which is far below the range of pH of 3 to 11 as taught by WO2006/137893.

In an embodiment, in the process for manufacturing shaped article(s) comprising carbon nanotubes the acidic liquid comprises one or more further acids, each of the one or more further acids having a Hammett acidity function less than that of 100% sulfuric acid.

In an embodiment, in the process for manufacturing shaped article(s) comprising carbon nanotubes the acidic liquid comprises polyphosphoric acid as a further acid. Preferably, the acidic liquid comprises 10 wt.% or less of polyphosphoric acid, preferably 5 wt.% or less of polyphosphoric acid, more preferably 2 wt.% or less, most preferably 1 wt.% or less of polyphosphoric acid. In an embodiment, the acidic liquid comprises 0.1 wt.% or more of polyphosphoric acid, preferably 0.2 wt.% or more, more preferably 0.5 wt.% or more of polyphosphoric acid to further improve the properties of the shaped articles comprising carbon nanotubes to obtain an improved dispersion of carbon nanotubes in the acidic liquid.

In an embodiment, in the process for manufacturing shaped article(s) comprising carbon nanotubes comprises the steps of supplying a dispersion of carbon nanotubes in an acidic liquid less than 80 wt.% of the carbon nanotubes comprised in the dispersion is dissolved into individual carbon nanotubes, preferably less than 70 wt.%, preferably less than 50 wt.%, preferably less than 40 wt.%, more preferably less than 30 wt.%, even more preferably less than 20 wt.%, most preferably less than 10 wt.% of the carbon nanotubes comprised in the dispersion is dissolved into individual carbon nanotubes.

The process for manufacturing shaped article(s) comprising carbon nanotubes may be a process for manufacturing carbon nanotubes fiber(s), wherein the carbon nanotubes supplied in an acidic liquid is shaped into carbon nanotubes fiber(s) by extruding the acidic liquid of carbon nanotubes in an acidic liquid through at least one spinning hole, preferably in a spinneret, to form carbon nanotubes fiber(s).

The process for manufacturing shaped article(s) comprising carbon nanotubes may be a process for manufacturing carbon nanotubes paper, wherein the supply of carbon nanotubes in an acidic liquid is shaped into carbon nanotubes paper by removing the acidic liquid, preferably being a dispersion, through a porous collecting surface, as for example is used in manufacturing of cellulosic-based paper or in manufacturing of wetlaid nonwovens.

The process for manufacturing shaped article(s) comprising carbon nanotubes may be a process for manufacturing carbon nanotubes tape(s), wherein the acidic liquid comprising carbon nanotubes is shaped into carbon nanotubes tape(s) by casting the acidic liquid comprising carbon nanotubes onto a surface, preferably onto the surface of a roller of a calender, as for example is used in manufacturing of polyolefin tapes.

The process for manufacturing shaped article(s) comprising carbon nanotubes may be a process for manufacturing a coaxial wire comprising a shield comprising carbon nanotubes, the shield surrounding a central conductive core and an insulation layer surrounding the central conductive core, wherein the acidic liquid comprising carbon nanotubes is shaped into a shield by pultrusion of the central conductive core and the insulation layer surrounding the conductive central core through the acidic liquid comprising carbon nanotubes.

A dispersion is a mixture of solid particles distributed in a liquid. The term dispersion in the present invention is understood to mean that only a part of all the carbon nanotubes comprised in the dispersion is dissolved into individual single carbon nanotubes, i.e. that less than 80 wt.% of the carbon nanotubes comprised in the dispersion is dissolved into individual single carbon nanotubes.
The term solution is understood to mean that a vast majority of all the carbon nanotubes comprised in the dispersion is dissolved into individual single carbon nanotubes, i.e. that more than 90 wt.% of the carbon nanotubes comprised in the dispersion are dissolved into individual single carbon nanotubes, preferably more than 95 wt.%, more preferably more than 98 wt.% of the carbon nanotubes comprised in the dispersion are dissolved into individual single carbon nanotubes.

Preferably, the dispersion supplied in the process for manufacturing carbon nanotubes fiber(s) according to the invention is a dispersion wherein less than 70 wt.% of the carbon nanotubes comprised in the dispersion is dissolved into individual carbon nanotubes in the acidic liquid, more preferably less than 50 wt.%, more preferably less than 40 wt.%, more preferably less than 30 wt.%, even more preferably less than 20 wt.%, most preferably less than 10 wt.% of the carbon nanotubes comprised in the dispersion is dissolved into individual carbon nanotubes.

The process according to the invention enables manufacturing of shaped articles comprising carbon nanotubes, preferably carbon nanotubes (CNT) fibers, utilizing carbon nanotubes of any quality. The quality of carbon nanotubes is defined by the G/D ratio, which is determined using Raman spectroscopy at a wavelength of e.g. 514 nm. The process according to the invention enables manufacturing of shaped articles comprising carbon nanotubes, preferably carbon nanotubes (CNT) fibers, utilizing carbon nanotubes having any G/D ratio. However, the process according to the invention in particular enables to manufacture shaped articles comprising carbon nanotubes, preferably carbon nanotubes (CNT) fibers, utilizing low quality carbon nanotubes as a raw material, the carbon nanotubes having a G/D ratio less than 15, a G/D ratio less than 10, or even a G/D ratio less than 5, for example in the range of 5 to 10, preferably 6 to 9, more preferably 7 to 8.

Prior art processes comprising the step of dissolving all carbon nanotubes individually in a super acid, such as for example chlorosulfonic acid, require carbon nanotubes having a high G/D ratio, preferably a G/D ratio of at least 10, more preferably at least 30.

In an embodiment, the dispersion supplied in the process for manufacturing carbon nanotubes fiber(s) according to the invention comprises carbon nanotubes having a G/D ratio of at least 10, preferably a G/D ratio of at least 25, more preferably a G/D ratio of at least 50, to further improve the properties of the shaped article, in particular to reduce the resistivity of the shaped article comprising carbon nanotubes, preferably of the carbon nanotubes (CNT) fiber.

For a person skilled in the art it is clear that a batch of carbon nanotubes will have a distribution in diameter, length and chirality and generally a distribution in the number of walls. Carbon nanotubes as used in the invention are to be understood to mean any type of carbon nanotubes, such as single wall carbon nanotubes (SWNT), double wall carbon nanotubes (DWNT), carbon nanotubes having few walls (FWNT), i.e. 3 or 4 walls, or multiwall carbon nanotubes (MWNT) having 5 walls or more and mixtures thereof, having an average length at least 10 times its average outer diameter, preferably at least 100 times its outer diameter, more preferably at least 1000 times its outer diameter, even more preferably at least 5000 times its outer diameter, most preferably at least 10000 times its outer diameter. The carbon nanotubes may be open ended carbon nanotubes or closed carbon nanotubes.

The acidic liquid comprising carbon nanotubes supplied in the process for manufacturing shaped articles comprising carbon nanotubes, preferably carbon nanotubes fibers, according to the invention may comprise semi-conducting carbon nanotubes, semi-metallic carbon nanotubes and/or metallic carbon nanotubes. Preferably, the carbon nanotubes comprised in the dispersion are semi-metallic carbon nanotubes or metallic carbon nanotubes to lower the resistivity in the shaped articles comprising carbon nanotubes, preferably in the carbon nanotubes fiber(s). Most preferably, the carbon nanotubes comprised in the dispersion are metallic carbon nanotubes.

In an embodiment, the majority of the carbon nanotubes in the dispersion are carbon nanotubes having at most 4 walls, preferably at most 3 walls, more preferably at most 2 walls. The term majority of the carbon nanotubes is understood to mean that at least 50 wt.%, preferably at least 75 wt.%, more preferably at least 90 wt.%, even more preferably at least 95 wt.%, most preferably at least 98 wt.% of all the carbon nanotubes in the dispersion are carbon nanotubes having at most 4 walls, preferably at most 3 walls, more preferably at most 2 walls to improve the resistivity, the thermal conductivity and/or the mechanical properties of the resulting shaped articles comprising carbon nanotubes, preferably of the resulting carbon nanotubes fibers. In an embodiment all the carbon nanotubes in the dispersion are carbon nanotubes having at most 4 walls, preferably at most 3 walls, more preferably at most 2 walls. Multiwall carbon nanotubes (MWNT) having 5 walls or more generally have a higher number of defects than single-wall carbon nanotubes, double-wall carbon nanotubes or few-wall carbon nanotubes. Although it is believed that double wall carbon nanotubes may intrinsically be best suited to obtain low resistivity in shaped articles comprising carbon nanotubes such as carbon nanotubes fiber(s), few wall carbon nanotubes can be manufactured much faster thus enabling a more economical process for manufacturing shaped articles comprising carbon nanotubes such as carbon nanotubes fibers.

In an embodiment, the process according to the invention provides shaped articles comprising carbon nanotubes, such as carbon nanotubes fibers, carbon nanotubes paper or carbon nanotubes tapes, consisting for at least 50 wt.% of carbon nanotubes, preferably for at least 75 wt.%, more preferably for at least 90 wt.%, even more preferably for at least 95 wt.%, most preferably for at least 98 wt.% of carbon nanotubes.

In an embodiment, the process according to the invention provides shaped articles comprising carbon nanotubes, such as carbon nanotubes fibers, carbon nanotubes paper or carbon nanotubes tapes, consisting for 100 wt.% of carbon nanotubes.

The term carbon nanotubes fiber as used in this invention is to be understood to include the final product and any intermediate of the spun carbon nanotubes. For example, it encompasses the liquid stream of dispersion spun out of the spinning hole(s), the partly and fully coagulated fibers as present in the coagulation medium, the drawn fibers, and it encompasses also the stripped, neutralized, washed and/or heat treated final fiber product. The term fiber is to be understood to include filaments, yarns, ribbons and tapes. A fiber may have any desired length ranging from a millimeter to virtually endless. Preferably, the fiber has a length of at least 10 cm, more preferably at least 1 m, more preferably at least 10 m, most preferably at least 1000 m.

Preferably, the carbon nanotubes comprised in the acidic liquid have an average length of at least 1 µm, more preferably at least 2 µm, even more preferably at least 5 µm, even more preferably at least 15 µm, even more preferably at least 50 µm, most preferably at least 100 µm. WO 2009/058855 A2 discloses that only chlorosulfonic acid is capable of dissolving carbon nanotubes with a length exceeding 1 µm, that only chlorosulfonic acid is capable of dissolving double-wall and multi-wall carbon nanotubes, and that only chlorosulfonic acid is capable of dissolving carbon nanotubes up to a concentration high enough such that the solution has a viscosity which is high enough to allow tensioning of the extrudate from the spinning hole.

When the carbon nanotubes have an average length of at least 1 µm, shaped articles comprising carbon nanotubes, preferably carbon nanotubes fibers, can be prepared having a low resistivity, high thermal conductivity and/or a high modulus. Increasing the average length of the carbon nanotubes enables to improve the properties of the shaped articles comprising carbon nanotubes, in particular the resistivity, thermal conductivity and/or modulus of the shaped articles comprising carbon nanotubes, preferably of the carbon nanotubes fibers.

The process according to the invention does not require the carbon nanotubes comprised in the acidic liquid to be subjected to a purification step, e.g. to remove residual metal catalyst particles and amorphous carbonaceous impurities, prior to being mixed into an acidic liquid. The process may thus exclude a step of purifying the carbon nanotubes prior to mixing the carbon nanotubes into an acidic mixture. US 7,125,502 B2 discloses that the single-wall carbon nanotubes are purified to remove residual iron metal catalyst particles and amorphous carbonaceous impurities by a gas-phase oxidation and an aqueous hydrochloric acid treatment.

The carbon nanotubes comprised in the dispersion may contain up to about 30 wt.% of impurities, such as for example amorphous carbon and/or catalyst residues, preferably up to 20 wt.%, more preferably up to 10 wt.%, most preferably up to 5 wt.% of impurities.

However, the process according to the invention may optionally comprise a purifying step to improve the properties of the shaped articles comprising carbon nanotubes, preferably being carbon nanotubes fibers, in particular the resistivity, thermal conductivity and/or modulus of shaped articles comprising carbon nanotubes.

The carbon nanotubes may be prepared by any known method. The carbon nanotubes may for example be synthesized in a chemical vapor deposition (CVD) system wherein carbon nanotubes grow in an array on a substrate. Without being bound to theory, it is believed that the carbon nanotubes are closely packed and highly aligned during synthesis in the array, and have a high ordering regarding the properties of the carbon nanotubes, for example regarding the chirality of the carbon nanotubes grown in the array. The synthesized carbon nanotubes available to the public are at least partly in the form of native ropes.

The term native rope is understood to mean an assembly of predominantly parallel carbon nanotubes grown in an array, and which remains in the ordering as grown in the array. The native ropes preferably have a diameter in the range of 30 to 200 nm.

The carbon nanotubes comprised in a native rope may be semi-conducting, semi-metallic or metallic. Preferably, the carbon nanotubes comprised in a native rope have a semi-metallic or metallic nature to lower the resistivity in the shaped articles comprising carbon nanotubes, preferably being carbon nanotubes fiber(s). Most preferably, the carbon nanotubes comprised in a native rope have a metallic nature.

Preferably, the native rope(s) comprised in the dispersion have a metallic band structure, a semi-metallic band structure or a semi-conducting band structure. Preferably, the native rope(s) in the dispersion have a metallic band structure or a semi-metallic band structure. Most preferably, the native rope(s) in the dispersion have a metallic band structure.

Preferably, at least 50 wt.% of the carbon nanotubes in a native rope have the same chirality, more preferably at least 75 wt.%, even more preferably at least 90 wt.%, even more preferably at least 95 wt.%, most preferably at least 98 wt.% of the carbon nanotubes in a native rope have the same chirality. In an embodiment all carbon nanotubes in a native rope have the same chirality.

The process according to the invention does not require to dissolve the majority of carbon nanotubes individually in a super acid solvent to provide a spinning solution as in prior art processes.

The process according to the invention enables to supply a dispersion comprising carbon nanotubes comprised in native ropes, the native ropes having a high ordering regarding the properties of the carbon nanotubes, for example regarding the chirality of the carbon nanotubes grown in an array.

In an embodiment, at least 10 wt.% of the carbon nanotubes comprised in the dispersion are comprised in native ropes, preferably at least 20 wt.%, more preferably at least 30 wt.%, even more preferably at least 40 wt.%, most preferably at least 50 wt.% of the carbon nanotubes comprised in the dispersion are comprised in native ropes. In an embodiment, all carbon nanotubes comprised in the acidic mixture are comprised in native ropes.

The process according to the invention may comprise the step of extruding the acidic liquid comprising carbon nanotubes through at least one spinning hole, preferably in a spinneret, to form spun carbon nanotubes fiber(s) and enables that the resulting carbon nanotubes fibers may comprise native ropes.

In an embodiment, at least 50 wt.% of the carbon nanotubes comprised in the shaped articles comprising carbon nanotubes, preferably being carbon nanotubes fibers, manufactured using the process according to invention are comprised in native ropes, preferably at least 75 wt.%, more preferably at least 90 wt.%, even more preferably at least 95 wt.%, most preferably at least 98 wt.% of the carbon nanotubes comprised in the shaped articles comprising carbon nanotubes manufactured using the process according to invention are comprised in native ropes. In an embodiment all carbon nanotubes comprised in the shaped articles comprising carbon nanotubes manufactured using the process according to invention are comprised in native ropes.

The length of the native ropes comprised in the acidic liquid and/or comprised in the shaped articles comprising carbon nanotubes, preferably being carbon nanotubes fibers, manufactured using the process according to invention may be in the range of 1 µm to 5 mm. Preferably, the length of the native ropes is in the range of 5 µm to 3 mm, more preferably in the range of 10 µm to 1 mm. An increased length of the native ropes enables to improve the properties of the shaped articles comprising carbon nanotubes, such as for example to reduce the resistivity of the shaped articles comprising carbon nanotubes. However, native ropes having a length exceeding 5 mm are increasingly more difficult to process in preparing a dispersion.

In an embodiment, the acidic liquid supplied in the process according to the invention comprises carbon nanotubes in the acidic liquid being dispersed in the acidic liquid and a part of the carbon nanotubes being dissolved in the acidic liquid, wherein the acidic liquid comprises an acid, preferably sulfuric acid, having a Hammett acidity function less than that of 100% sulfuric acid, but at least a Hammett acidity function of at least 90% sulfuric acid enables processing of long carbon nanotubes, which are advantageous to improve the properties of the shaped article comprising carbon nanotubes, in particular to reduce the resistivity of the shaped article comprising carbon nanotubes, mixed with short carbon nanotubes, preferably having a length less than 1 µm, which may be more easily dissolved in the acidic liquid and which can improve the cohesion of the shaped article comprising carbon nanotubes. The short carbon nanotubes dissolved in the acidic mixture may act as a glue between the long carbon nanotubes in the shaped article.

The acidic liquid supplied in the process according to the invention advantageously comprises carbon nanotubes mixed with a sulfuric acid having a Hammett acidity function less than that of 100% sulfuric acid, wherein the acidic liquid comprises sulfuric acid having an acidity of at least 90% sulfuric acid and preferably 10 wt.% or less of polyphosphoric acid, which allows the use of equipment already known to withstand prolonged production cycles, for example equipment used to manufacture aramid fibers from a spin-dope comprising aramid polymer in a sulfuric acid. Preferably, the dispersion comprises carbon nanotubes mixed with a sulfuric acid having an acidity equal or more than 95% sulfuric acid, more preferably equal or more than 96% sulfuric acid, more preferably equal or more than 97% sulfuric acid, more preferably equal or more than 98% sulfuric acid, more preferably equal or more than 99% sulfuric acid, more preferably equal or more than 99.8% sulfuric acid, more preferably equal or more than 99.9% sulfuric acid. Sulfuric acid having a Hammett acidity function less than that of 100% sulfuric acid is not an anhydrous acid, as is a requirement in the process of US 7,125,502 B2. Furthermore, reducing the acidity of sulfuric acid having a Hammett acidity function less than that of 100% sulfuric acid reduces fuming of the acidic liquid, which is advantageous from a health and safety point of view.

The dispersion supplied in the process according to the invention may be formed by mixing carbon nanotubes and one or more acidic liquids. The method for mixing carbon nanotubes and one or more acidic liquids is not specifically limited. The process according to the invention, comprising the step of supplying a dispersion of carbon nanotubes in one or more acids having an having a Hammett acidity function less than that of 100% sulfuric acid enables, due to a less corrosive nature, in particular in comparison to chlorosulfonic acid, to use readily available equipment such as for example a mixer, preferably a Speedmixer, a kneader, preferably a Z-blade kneader, or an Omega® dispersionizer, or using a (semi- continuous shearing apparatus, such as an extruder, such as a single screw extruder or preferably a twin screw extruder, or a twin shaft kneader. Preferably, the dispersion supplied in the process according to the invention is formed by mixing carbon nanotubes and one or more acidic liquid using a (semi-)continuous shearing apparatus to enable a continuous manufacturing process and/or to allow degassing of the dispersion.

The process according to the invention, comprising the step of supplying, preferably a dispersion of, carbon nanotubes in an acidic liquid having a Hammett acidity function less than that of 100% sulfuric acid, wherein the acidic liquid in the dispersion comprises sulfuric acid having a Hammett acidity function equal or more than that of 90% sulfuric acid, and preferably 10 wt.% or less of polyphosphoric acid, allows for inclusion of some water into the dispersion, whereas chlorosulfonic has to be kept anhydrous. This enables to use carbon nanotubes which have not been fully dried prior to mixing the carbon nanotubes into the acidic liquid. Any water adhering to the carbon nanotubes will become part of the acidic liquid.

The process according to the invention does not require the use of chlorosulfonic acid to dissolve all carbon nanotubes into individual single carbon nanotubes, which enables to manufacture carbon nanotubes fibers comprising no or only a very limited amount of chlorine.

Preferably, the process according to the invention may be used to manufacture shaped articles comprising carbon nanotubes, preferably being carbon nanotubes fibers, comprising less than 10000 ppm of chlorine, more preferably less than 1000 ppm, most preferably less than 100 ppm of chlorine.

The process according to the invention may be used to manufacture shaped articles comprising carbon nanotubes, preferably being carbon nanotubes fibers, comprising some sulfur, preferably in the range of 100 to 10000 ppm to reduce the resistivity of the shaped articles comprising carbon nanotubes.

In an embodiment, the dispersion supplied in the process according to the invention may comprise carbon nanotubes dispersed in a mixture of a sulfuric acid having a Hammett acidity function less than that of 100% sulfuric acid, wherein the acidic liquid comprises sulfuric acid having a Hammett acidity function equal or more than that of 90% sulfuric acid, and preferably 10 wt.% or less of polyphosphoric acid, as described above. The acidic liquid comprising a sulfuric acid having a Hammett acidity function equal or more than that of 90% sulfuric acid and polyphosphoric acid enables to obtain a better dispersion of the carbon nanotubes in the dispersion as compared to only a sulfuric acid, and in particular enables to retain native ropes in the dispersion and to improve the properties of the shaped articles comprising carbon nanotubes, preferably being carbon nanotubes fibers, manufactured by the process, in particular the resistivity, thermal conductivity and/or modulus of the shaped articles comprising carbon nanotubes.

Preferably, the acidic liquid comprises a sulfuric having a Hammett acidity function less than that of 100% sulfuric acid and polyphosphoric acid comprises the sulfuric acid and polyphosphoric acid in a weight ratio in the range of 75/25 to 99/1, preferably in the range of 75/25 to 95/5, more preferably in the range of 80/20 to 92.5/7.5, even more preferably in the range of 85/15 to 90/10.

The process according to the invention may be used to manufacture shaped articles comprising carbon nanotubes, preferably being carbon nanotubes fibers, comprising some phosphor, preferably in the range of 100 to 50000 ppm to reduce the resistivity of the shaped articles comprising carbon nanotubes. The phosphor may for example originate from polyphosphoric acid in the acidic mixture, which acts as an in-situ dopant of the shaped articles comprising carbon nanotubes.

The dispersion supplied in the process according to the invention comprising carbon nanotubes in an acidic liquid comprising at least one acid having a Hammett acidity function less than that of 100% sulfuric acid may exhibit a liquid crystalline phase of carbon nanotubes. In an embodiment, less than 25 wt.% of the carbon nanotubes in the dispersion are contained in liquid crystalline phase, more preferably less than 10 wt.%, more preferably less than 7.5 wt.%, even more preferably less than 5 wt.%, most preferably less than 2.5 wt.%.

In an embodiment, the dispersion supplied in the process according to the invention does not comprise a liquid crystalline phase comprising carbon nanotubes at all.

The dispersion supplied in the process according to the invention preferably comprises 0.2 wt.% to 25 wt.% of carbon nanotubes, based on the total weight of the dispersion, preferably 0.3 wt.% to 20 wt.%, more preferably 0.5 wt.% to 10 wt.%, even more preferably 1 wt.% to 7 wt.%, most preferably 2 wt.% to 5 wt.% of carbon nanotubes to achieve more economical processing.

In an embodiment, the dispersion supplied in the process according to the invention preferably comprises 0.1 wt.% to 2 wt.% of carbon nanotubes, based on the total weight of the dispersion, preferably 0.2 wt.% to 1 wt.%, more preferably 0.3 wt.% to 0.8 wt.%, even more preferably 0.4 wt.% to 0.6 wt.%, to improve the properties of the shaped article, in particular to reduce the resistivity in the shaped article, preferably being a carbon nanotubes fiber. The low concentration enables to orient the carbon nanotubes in the dispersion, in particular when the dispersion comprises carbon nanotubes in native ropes, which can be disentangled in the dispersion at such low concentrations.

The dispersion may additionally comprise polymers, coagulants, surfactants, salts, nanoparticles, dyes or materials that can improve conductivity of the resulting of shaped articles comprising carbon nanotubes, preferably being carbon nanotubes (CNT) fibers.

The dispersion of carbon nanotubes in an acidic liquid comprising at least one acid having a Hammett acidity function less than that of 100% sulfuric acid, the at least one acid having a Hammett acidity function equal or more than that of 90% sulfuric acid and preferably 10 wt.% or less of polyphosphoric acid, supplied in the process according to the invention may additionally comprise polymers that can improve the mechanical properties, in particular the strength and/or the modulus of the shaped article, in particular of carbon nanotubes fiber(s), while maintaining sufficient conductivity in the shaped article. Preferably, the polymer comprised in the dispersion is an aromatic polyamide, more preferably a para-phenylene terephthalamide (PPTA).

The shaped article may comprise at least 50 wt.% of carbon nanotubes, preferably at least 60 wt.%, more preferably at least 70 wt.% of carbon nanotubes. The shaped article may comprise at least 10 wt.% of polymer, in particular an aromatic polyamide, preferably a para-phenylene terephthalamide, preferably at least 20 wt.%, more preferably at least 30 wt.% of polymer, in particular an aromatic polyamide, preferably a para-phenylene terephthalamide.

For example, a shaped article, in particular a carbon nanotubes fiber, comprising 70 wt.% of carbon nanotubes and 30 wt.% of a para-phenylene terephthalamide may be used as a heating element due to the combination of a relatively high resistivity and relatively high strength.
For example, a shaped article, in particular a carbon nanotubes fiber, comprising 50 wt.% of carbon nanotubes and 50 wt.% of a para-phenylene terephthalamide may be used as an anti-ballistic element.

The dispersion wherein less than 80 wt.% of the carbon nanotubes comprised in the dispersion is dissolved into individual carbon nanotubes may be supplied to at least one spinning hole, preferably in a spinneret, and extruded through the at least one spinning hole(s) to obtain spun carbon nanotubes fiber(s). The spinneret may contain any number of spinning holes, ranging from one spinning hole, for example to manufacture carbon nanotubes monofilament, up to several thousands, for example to produce multifilament carbon nanotubes yarns.

In an embodiment of the process to obtain carbon nanotubes (CNT) fibers, the spinning hole(s), preferably in a spinneret, are circular and have a diameter in the range of 10 to 1000 µm, more preferably in the range of 50 to 800 µm, even more preferably in the range 200 to 700 µm to improve extrusion of the dispersion through the spinning hole(s). The length to diameter ratio of the spinning hole(s) may vary. The L/D ratio of the spinning hole(s) may range from 1 to 50. Preferably, the L/D ratio of the spinning hole(s) is less than 30, more preferably less than 25. Preferably, the L/D ratio of the spinning hole(s) is least 1, more preferably at least 2.

In an alternative embodiment, the spinning holes may have a non-circular cross section, such as for example oval, multi-lobal or rectangular, having a major dimension defining the largest distance between two opposing sides of the cross section and a minor dimension defining smallest distance between two opposing sides of the cross section. The minor dimension of the non-circular cross section is preferably in the range of 10 to 1000 µm, more preferably in the range of 50 to 800 µm, even more preferably in the range of 200 to 700 µm. The length to minor dimension of the non-circular cross section ratio of the spinning hole(s) may vary. The L/M ratio of the spinning hole(s) may range from 1 to 50. Preferably, the L/M ratio of the spinning hole(s) is less than 30, more preferably less than 25. Preferably, the L/M ratio of the spinning hole(s) is least 1, more preferably at least 2.

The entrance opening of the spinning hole(s) may be tapered, preferably with a length over diameter ratio of the cylindrical portion larger than 1.

The extruded carbon nanotubes (CNT) fiber(s), also called spun CNT fiber(s), may be spun directly into a coagulation medium, or may be guided into a coagulation medium via an air gap. The coagulation medium may be contained in a coagulation bath, or may be supplied in a coagulation curtain. The coagulation medium in the coagulation bath may be stagnant or there may be a flow of coagulation medium inside or through the coagulation bath.

The spun carbon nanotubes (CNT) fibers may enter the coagulation medium directly to coagulate the CNT fibers to increase the strength of the carbon nanotubes fibers to ensure that the carbon nanotubes fibers are strong enough to support their own weight. The speed of the carbon nanotubes fiber(s) in the coagulation medium is in general established by the speed of a speed-driven godet or winder after the carbon nanotubes fibers have been coagulated and optionally neutralized and/or washed.

In an air gap the spun carbon nanotubes fiber(s) can be drawn to increase the orientation in the carbon nanotubes fiber(s) and the air gap avoids direct contact between spinneret and coagulation medium. The speed of the carbon nanotubes fiber(s) and thus the draw ratio in the air gap is in general established by the speed of a speed-driven godet or winder after the carbon nanotubes fibers have been coagulated and optionally neutralized and/or washed.

Preferably, the extruded carbon nanotubes fibers are guided into the coagulation medium via an air gap.

The coagulation speed of carbon nanotubes fibers may be influenced by flow of the coagulation medium. In the processes according to the invention the coagulation medium may flow in the same direction as the carbon nanotubes fibers. The flow velocity of coagulation medium can be selected to be lower, equal to or higher than the speed of the carbon nanotubes fibers.

The extruded carbon nanotubes fibers may be spun horizontally, vertically or even under an angle to the vertical direction.

In an embodiment, the extruded carbon nanotubes fibers are spun horizontally. Horizontal spinning can for example be advantageous to keep the coagulation bath shallow. Carbon nanotubes fibers may be retrieved relatively easy from the shallow coagulation bath at start up of the process or when breakage of the carbon nanotubes fiber occurs.

The extruded carbon nanotubes fibers may be spun directly into the coagulation bath in a horizontal direction. The extruded carbon nanotubes fibers are only limitedly influenced by gravity forces and are supported by the liquid coagulation medium and will therefore not break up into smaller pieces under their own weight.

In an embodiment, the extruded carbon nanotubes fibers are spun directly into a coagulation bath in the shape of a tube wherein coagulation medium may flow in the same direction as the carbon nanotubes fibers. The flow velocity of the coagulation medium is determined by the fluid flow supplied to the tube and the diameter of the transport tube and can be set to any desired value relative to the speed of the carbon nanotubes fibers.

Alternatively, the tube may be submerged in coagulation medium inside a larger coagulation bath. Without carbon nanotubes fibers, the flow velocity of the coagulation medium inside the tube is determined by the height difference between the liquid level of the coagulation bath and the outlet of the transport tube.

The extruded carbon nanotubes fibers may be spun vertically through an air gap before entering a coagulation bath containing coagulation medium or may be spun vertically directly in a coagulation bath containing coagulation medium.

In an embodiment, the extruded carbon nanotubes fibers may be spun directly or via an air-gap into a rotating coagulation bath. The speed of rotation of the rotating coagulation bath may be higher than the extrusion velocity of the extruded carbon nanotubes fibers in order to apply tension to carbon nanotubes fibers.

Alternatively, the speed of rotation of the rotating coagulation bath may be equal to the extrusion velocity of the extruded carbon nanotubes fibers in order to prevent tension to carbon nanotubes fibers until the carbon nanotubes fibers has gained sufficient strength due to coagulation prior to an optional drawing and/or annealing step. Annealing is understood the mean a treatment at elevated temperature under tension such that the stretching of the carbon nanotubes fibers is very limited, preferably below 2%, during annealing.

The speed of rotation of the rotating coagulation bath may also be lower to the extrusion velocity of the extruded carbon nanotubes fibers to allow relaxation of the carbon nanotubes fibers, e.g. until the carbon nanotubes fibers has gained sufficient strength due to coagulation prior to an optional drawing step.

A conveyor belt may be provided inside the coagulation bath to collect and transport the extruded carbon nanotubes fibers until the carbon nanotubes fibers has gained sufficient strength due to coagulation prior to an optional drawing step.

Alternatively, the extruded carbon nanotubes fibers may be spun vertically into a curtain of coagulation medium, with or without air-gap. The curtain of coagulation medium can easily be formed by using an overflow system.

In an embodiment, the extruded carbon nanotubes fibers may be spun in a rotor-spinning process as for example known from spinning of aramid fibers.

The extruded carbon nanotubes fibers may be spun directly into the coagulation medium vertically upward or under an angle between the horizontal and the vertically upward direction, i.e. in a direction against gravity. Extruding carbon nanotubes fibers in a direction against gravity is especially preferred when the density of the spun CNT fibers is lower than the density of the coagulation medium. At start-up of the process the extruded carbon nanotubes fibers will float towards the top end of the coagulation bath where the carbon nanotubes fibers can be picked up from the surface.

The coagulation bath containing the coagulation medium may be in the shape of a tube wherein coagulation medium may flow from the bottom to the top of the tube. The flow velocity of the coagulation medium is determined by the fluid flow supplied to the tube and the diameter of the transport tube and can be set to any desired value relative to the speed of the carbon nanotubes fibers.

Suitable coagulation media or coagulants are for example sulfuric acid, the sulfuric acid preferably having an acidity which is lower than acidity of a sulfuric acid comprised in the acidic dispersion, for example 14% sulfuric acid, PEG-200, dichloromethane, trichloromethane, tetrachloromethane, ether, water, alcohols, such as methanol, ethanol and propanol, acetone, N-methyl pyrrolidone (NMP), dimethylsulfoxide (DMSO), sulfolane, and any mixture thereof. The coagulant may contain dissolved material such as surfactant or polymer such as polyvinylalcohol (PVA). It is also possible to add agents to the coagulation medium that can be entrapped in the fiber to enhance its properties, such as but not limited to polymers, surfactants, salts, nanoparticles, dyes and materials that can improve conductivity such as iodine. Preferably, the coagulation medium comprises water or acetone. The coagulant may contain a relatively small amount of one or more constituents, other than the carbon nanotubes, of the acidic dispersion supplied in the process according to the invention, for example due to recirculation of coagulant in the process.

In an embodiment, the coagulation medium has a concentration of water which is higher than the concentration of water in the dispersion supplied in the process according to the invention. Preferably, the coagulation medium comprises sulfuric acid having an acidity less than the acidity of the sulfuric acid comprised in the dispersion supplied in the process according to the invention.

Preferably, the process includes a step of drawing the spun carbon nanotubes fiber, preferably at a draw ratio of at least 0.8, preferably at least 1.0, more preferably at least 1.1, more preferably at least 1.2, more preferably at least 2, even more preferably at least 5, most preferably at least 10, in order to improve the properties of the carbon nanotubes (CNT) fibers, in particular to increase modulus and/or tensile strength. An increase of the draw ratio can also be used to reduce the diameter of the resulting carbon nanotubes fibers.

In a preferred embodiment, the carbon nanotubes fiber has a circular or round cross section. Preferably, the carbon nanotubes (CNT) fiber has a diameter in the range of 1 to 200 µm, more preferably in the range of 2 to 100 µm, even more preferably in the range of 5 to 50 µm, most preferably in the range of 15 to 35 µm.

In an alternative embodiment, the carbon nanotubes fiber may have any non-circular cross section, such as for example an oval, a multi-lobal or a rectangular cross section, having a major dimension defining the largest distance between two opposing sides of the cross section and a minor dimension defining smallest distance between two opposing sides of the cross section. The minor dimension of the non-circular cross section of the carbon nanotubes fiber is preferably in the range of 1 to 200 µm, more preferably in the range of 2 to 100 µm, even more preferably in the range of 5 to 50 µm, most preferably in the range of 15 to 35 µm.

Drawing of the spun carbon nanotubes fiber(s) may be applied in a one-step process, wherein the dispersion is extruded through the spinning hole(s), the spun carbon nanotubes fiber(s) are drawn and optionally coagulated, stripped, neutralized and/or washed, dried and/or and wound in one continuous process.

Alternatively, drawn carbon nanotubes fibers can be prepared in two-step process. In the first processing step the dispersion is extruded through the spinning hole(s), the spun carbon nanotubes fiber(s) are optionally coagulated, stripped, neutralized and/or washed, and wound. Subsequently, the spun and optionally coagulated, stripped, neutralized and/or washed carbon nanotubes fibers can be winded on bobbins and can be unwinded and drawn and/or annealed in a separate drawing process.

In a one-step process, the draw ratio is to be understood to mean the ratio of the winding speed of the carbon nanotubes fiber(s) over the superficial velocity of the dispersion in the spinning hole(s). The superficial velocity can be calculated as the volume flow in m³/s, of dispersion extruded through the spinning hole(s) divided by the cross sectional area of the spinning hole(s) in m². In the alternative that the carbon nanotubes fiber is drawn in a separate processing step in a two-step process, the draw ratio is to be understood to mean the ratio of the winding speed of the carbon nanotubes fiber(s) after drawing over the unwinding speed.

Preferably, the dispersion comprising carbon nanotubes passes through one or more filters before being supplied to the spinning hole(s) to further improve the quality of the dispersion. The dimensions of the openings in the one or more filters can be selected such that the openings in the filter are small enough to be able to remove lumps of material from the dispersion which may block one or more spinning holes. The dimensions of the openings in the one or more filters can be selected such that the openings in the filter are large enough to ensure that the concentration of carbon nanotubes in the dispersion is not increased.

Preferably, the dimension of the openings in the one or more filters is less than the minor dimension of the spinning holes to improve extrusion of the dispersion through the spinning holes. Preferably, the ratio of the minor dimension of the one or more spinning holes over the dimension of the openings in a filter is at least 1.0, more preferably at least 1.5, most preferably at least 2.0.

The spun and coagulated carbon nanotubes fiber can be collected on a winder. The winding speed preferably is at least 0.1 m/min, more preferably 1 m/min, even more preferably at least 5 m/min, even more preferably at least 50 m/min, most preferably at least 100 m/min.

The spun and coagulated carbon nanotubes fiber can optionally be neutralized and/or washed, preferably with water, and subsequently dried.

The winder may be located inside the coagulation bath to wash the coagulated carbon nanotubes fiber while being wound on a bobbin, which is especially useful when the coagulation medium used to coagulate the spun fiber(s) is also suitable to wash the carbon nanotubes fibers, for example when the coagulation medium is water. The winder may be submerged fully or only partially in the coagulation medium. Preferably, the bobbin collecting the carbon nanotubes fiber(s) is submerged only partially in the coagulation medium.

However, the winder may be located outside the coagulation bath to reduce the influence of the coagulation medium on the wear of the winder.

Drying of the carbon nanotubes fibers may be performed by any known drying technique, such as for example hot air drying, infra red heating, vacuum drying, etc.

Drying of the carbon nanotubes fibers may be performed under tension or without applying a tension on the of the carbon nanotubes fibers.

After drying, resistivity may be further improved by doping the fiber with substances such as but not limited to iodine, potassium, acids or salts.

In an embodiment, the carbon nanotubes fiber comprises up to 25 wt.% of a charge carrier donating material(s) to reduce the resistivity of the carbon nanotubes fiber.

The charge carrier donating material may be comprised within the individual carbon nanotubes, in particular when the carbon nanotubes fiber comprises open ended carbon nanotubes, and/or the a charge carrier donating material may be comprised in between the individual carbon nanotubes, in particular when the carbon nanotubes fiber comprises closed carbon nanotubes.

The charge carrier donating material may comprise for example, but not limited to, an acid, preferably an acid which is comprised in the acidic liquid, or a salt, such as for example CaCl₂, FeCl₃, bromine (Br₂) or bromine containing substances and/or iodine (I₂). Preferably, the carrier donating material is iodine.

In a preferred embodiment, the carbon nanotubes fiber has a tensile strength of at least 0.3 GPa, preferably at least 0.8 GPa, more preferably at least 1.0 GPa, most preferable at least 1.5 GPa, as determined in accordance with ASTM D7269.

In a preferred embodiment, the carbon nanotubes fiber has a resistivity less than 1000 µΩ.cm, preferably less than 500 µΩ.cm, more preferably less than 100 µΩ.cm, even more preferably less than 50 µΩ.cm.

Tensile strength is determined on samples of 20 mm length by measuring breaking force at 3 mm/s extension rate and dividing the force by the average surface area of the filament. Modulus is determined by taking the highest slope in the force vs. elongation curve, and divide the value of the highest slope by the average surface area of the carbon nanotubes fiber.

Fiber surface area is determined from the average diameter. Both light microscopy and scanning electron microscopy (SEM) can be used for determining the cross-sectional surface areas of the CNT fibers. To determine the surface areas from SEM measurements (FEI Quanta 400 ESEM FEG), fiber diameters can be measured at a magnification of ∼1x10⁴ for a minimum of 10 segments of a 20 mm length of fiber.

For light microscopy measurements (transmitted light; Olympus BH60; 550 nm filter), samples were prepared by taping fibers onto a piece of cardboard. The fibers on the cardboard were then embedded in Epoheat resin. After curing, the samples were cut perpendicular to the fiber axis and polished. The polished surface is imaged with the light microscope and SISpro Five image analysis software can be used to measure the cross-sectional areas of the embedded fibers.

### Examples

Carbon nanotubes fibers were spun from a dispersion comprising carbon nanotubes as listed in Table 1. The carbon nanotubes were dried overnight in a vacuum oven at 160°C before forming the dispersion.

Resistivity has been determined using a 4-point probe method. A fiber is placed on a hard underground and at enough tension applied to keep the fiber straight. The two outer contacts for applying current and two inner contacts for measuring electrical voltage are applied by pressuring probes on the fiber surface. A Hewlett Packard multimeter 34401A is used. Tests with different distances between the contacts, different fiber thickness and resistance values showed good reproducibility of the results. Resistivity has been calculated from resistance using fibers fiber density of 1.3 g/cm³.

**Table 1: Carbon nanotubes (CNT) used in preparing CNT fibers**

| CNT | No. of walls | Diameter [nm] | Length [µm] | G/D ratio |
|---|---|---|---|---|
| A | Single wall | 1.8 | 5 | 224 (at 488 nm) |
| B | Single wall | 1.6 | 5 | 161 (at 532 nm) |
| C | Single wall | 1.6 | 5 | 80 (at 532 nm) |
| D | Double wall | 2 | 6 | 70 |

### Examples 1-5

A dispersion of carbon nanotubes in an acidic liquid was provided by mixing carbon nanotubes with an acidic liquid. In a glovebox the acidic liquid and the carbon nanotubes were brought together in a container to a concentration of 1 wt.% of the CNT material. The container was then placed in a Speedmixer type DAC 150.1 FVZ-K and mixed during 60 minutes at 3000 rpm. The appearance of the dispersion was judged under the microscope. CNT fibers were extruded by extruding the dispersion through a syringe into a coagulation bath. The coagulation bath consisted of water, or acetone where specifically mentioned (example 3). The fibers were formed in the coagulation bath by moving the syringe through the bath.

**Table 2: Examples 1-4**

| Example | CNT | Acidic liquid | Microscopy | |
|---|---|---|---|---|
| 1 | A | 96% sulfuric acid | Coarse fibrous material | Some fiber breakage |
| 2 | A | 99.8% sulfuric acid | Fine fibrous material | Fiber sufficiently strong |
| 3 | A | 100 parts 96% sulfuric acid and 33.3 parts polyphosphoric acid | Fibrous flocks | Weak fiber |
| 4 | A | 102.5 parts 99.8% sulfuric acid and 8.2 parts polyphosphoric acid | Strings of CNT's | Fiber sufficiently strong |

### Examples 5-6

A dispersion of carbon nanotubes in an acidic liquid consisting of 100 parts of 99.8% sulfuric acid and 8 parts of polyphosphoric acid (Merck) was provided. In a glovebox the acidic liquid and the carbon nanotubes were brought together in a container to a predetermined concentration of CNT material, as listed in Table 3. The container was then placed in a Speedmixer type DAC 800.1 FVZ and mixed during 60 minutes at 1950 rpm. Fibers were extruded by extruding the dispersion through a syringe into a coagulation bath consisting of water. The fibers were formed in the coagulation bath by moving the syringe through the bath.

**Table 3: Examples 5-6**

| Example | CNT | Concentration of CNT's in dispersion | Linear density of fiber [dtex] | Resistivity [µΩ.cm] |
|---|---|---|---|---|
| 5 | A | 1 wt.% | 93 | 177 |
| 6 | A | 2.5 wt.% | 238 | 249 |

### Examples 7-10

A dispersion of carbon nanotubes in an acidic liquid was provided. In a glovebox the acidic liquid and the carbon nanotubes were brought together in a container to a concentration of 3.5 wt.% of CNT material. Different acidic liquids were used, as listed in Table 4. The container was then placed in a Speedmixer type DAC 150.1 FVZ-K and mixed during 60 minutes at 3500 rpm. CNT fibers were extruded by extruding the dispersion through a syringe (examples 7-9) or by extruding the dispersion using a plunger type of spinning machine (example 10) into a coagulation bath consisting of water with or without air gap.

**Table 4: Examples 7-10**

| Example | CNT | Acidic liquid | Linear density of fiber [dtex] | Resistivity [µΩ.cm] |
|---|---|---|---|---|
| 7a (air gap) | A | 99.8% sulfuric acid | 230 | 149 |
| 7b (no air gap) | A | 99.8% sulfuric acid | 241 | 170 |
| 8a (air gap) | A | 99.9% sulfuric acid | 227 | 135 |
| 8b (no air gap) | A | 99.9% sulfuric acid | 228 | 136 |
| 9a (air gap) | A | 100 parts 99.8% sulfuric acid and 8 parts of polyphosphoric acid | 242 | 124 |
| 9b (no air gap) | A | 100 parts 99.8% sulfuric acid and 8 parts of polyphosphoric acid | 244 | 124 |
| 10 (no air gap) | A | 99.9% sulfuric acid | 252 | 150 |

### Examples 11-14

A dispersion of carbon nanotubes in an acidic liquid consisting of 99.9% sulfuric acid was provided. In a glovebox the acidic liquid and the carbon nanotubes were brought together in a container to a concentration of 1 wt.% of CNT material.

The container was then placed in a Speedmixer type DAC 150.1 FVZ-K and mixed at 3500 rpm during 40 minutes (example 11-13) or during 50 minutes (example 14). CNT fibers were extruded by extruding the dispersion through one capillary of 510 µm (example 11-13) or three capillaries of 500 µm (example 14) using a plunger type spinning machine into a coagulation bath without air gap. The coagulation bath consisted of water. The CNT fibers were drawn through the coagulation bath and wound on a drum. The extrusion speed and winding speed were varied, as listed in Table 5.

**Table 5: Examples 11-14**

| Example | CNT | Extrusion speed [m/min] | Winding speed [m/mi] | Linear density of fiber [dtex] | Resistivity [µΩ.cm] |
|---|---|---|---|---|---|
| 11 | B | 2 | 2 | 54 | 47 |
| 12 | B | 2 | 3 | 37 | 41 |
| 13 | B | 4 | 4 | 65 | 47 |
| 14 | B | 2 | 2.2 | 125 | 47 |

### Examples 15-16

A dispersion of carbon nanotubes in an acidic liquid consisting of 99.9% sulfuric acid was provided. In a glovebox the acidic liquid and the carbon nanotubes were brought together in a container to a concentration of 1 wt.% of CNT material.

The container was then placed in a Speedmixer type DAC 150.1 FVZ-K and mixed at 3500 rpm during 50 minutes. CNT fibers were extruded by extruding the dispersion through one capillary (example 15) or three capillaries (example 16) using a plunger type spinning machine into a coagulation bath without air gap. The coagulation bath consisted of water. The CNT fibers were drawn through the coagulation bath and wound on a drum. The extrusion speed and winding speed were varied, as listed in Table 6.

**Table 6: Examples 15-16**

| Example | CNT | Extrusion speed [m/min] | Winding speed [m/mi] | Linear density of fiber [dtex] | Resistivity [µΩ.cm] |
|---|---|---|---|---|---|
| 15 | D | 2 | 4 | 15 | 29 |
| 16 | D | 2 | 2.2 | 79 | 29 |

### Examples 17-19

A dispersion of carbon nanotubes in an acidic liquid consisting of 99.9% sulfuric acid was provided. In a glovebox the acidic liquid and the carbon nanotubes were brought together in a container to a concentration of 1 wt.% of CNT material. The container was then placed in a Speedmixer type DAC 800.1 FVZ and mixed at 1950 rpm during 10 minutes. This acidic liquid comprising carbon nanotubes could not be extruded using a syringe. The acidic liquid comprising carbon nanotubes was additionally mixed using a Theysohn 20mm twin screw extruder and collected. The collected acidic liquid comprising carbon nanotubes from the twin screw extruder was subsequently extruded through a single capillary using a syringe into a coagulation bath without air gap (example 17). The coagulation bath consisted of water. In examples 18 and 19, the acidic liquid comprising carbon nanotubes additionally mixed with the twin screw extruder was extruded in-line through one capillary (example 18) or through 7 capillaries (example 19).

**Table 7: Examples 17-19**

| Example | CNT | Linear density of fiber [dtex] | Resistivity [µΩ.cm] |
|---|---|---|---|
| 17 | A | 49 | 80 |
| 18 | A | 80 | 168 |
| 19 | A | n.a. | n.a. |

## Claims

1. A shaped article comprising carbon nanotubes, preferably a carbon nanotubes fiber, a carbon nanotubes paper, a carbon nanotubes tape or a coaxial wire comprising a shield comprising carbon nanotubes, obtainable by a process comprising the steps of supplying carbon nanotubes in an acidic liquid comprising at least one acid, the at least one acid having a Hammett acidity function less than that of 100% sulfuric acid, the at least one acid having a Hammett acidity function equal or more than that of 90% sulfuric acid, wherein the Hammett acidity function is determined for the acid in the acidic liquid, and shaping the carbon nanotubes in the acidic liquid into a shaped article.

2. The shaped article according to claim 1 wherein the shaped article comprises less than 10000 ppm of chlorine, preferably less than 1000 ppm, more preferably less than 100 ppm of chlorine.

3. The shaped article according to any of the previous claims wherein the shaped article comprises sulfur.

4. The shaped article according to claim 3 wherein the shaped article comprises sulfur in the range of 100 to 10000 ppm.

5. The shaped article according to any of the previous claims wherein the shaped article comprises phosphor.

6. The shaped article according to claim 5 wherein the shaped article comprises phosphor in the range of 100 to 50000 ppm.

7. The shaped article according to any of the previous claims wherein the shaped article comprises carbon nanotubes having a G/D ratio less than 10.

8. The shaped article according to any of the previous claims wherein the shaped article comprises native ropes.

9. The shaped article according to claim 8 wherein the native ropes have a diameter in the range of 30 to 200 nm.

10. The shaped article according to any of claims 8 to 9 wherein the length of the native ropes is in the range of 5 µm to 3 mm, preferably in the range of 10 µm to 1 mm.

11. The shaped article according to any of claims 8 to 10 wherein at least 50 wt.% of the carbon nanotubes in a native rope have the same chirality.

12. The shaped article according to any of the previous claims wherein the shaped article is a carbon nanotubes fiber having a resistivity of less than 1000 µΩ.cm, preferably less than 500 µΩ.cm, more preferably less than 100 µΩ.cm, even more preferably less than 50 µΩ.cm.

13. The shaped article according to any of claims 1 to 11 wherein the shaped article is a carbon nanotubes fiber, wherein the fiber has a tensile strength of at least 0.3 GPa, preferably at least 0.8 GPa, more preferably at least 1.0 GPa, most preferable at least 1.5 GPa, as determined in accordance with ASTM D7269.

14. The shaped article according to any of claims 1 to 11 wherein the shaped article is a carbon nanotubes fiber having a non-circular cross section having a major dimension defining the largest distance between two opposing sides of the cross section and a minor dimension defining smallest distance between two opposing sides of the cross section, the carbon nanotubes fiber preferably having a minor dimension of the non-circular cross section in the range of 1 to 200 µm, more preferably in the range of 2 to 100 µm, even more preferably in the range of 5 to 50 µm, most preferably in the range of 15 to 35 µm.

15. A composite article comprising one or more shaped article(s) comprising carbon nanotubes according to any of claims 1 to 14.
